Europäisches Patentamt

European Patent Office

Office européen des brevets

(19)

(11) Numéro de publication: **0 285 732 B1**

(12) **FASCICULE DE BREVET EUROPEEN**

(45) Date de publication de fascicule du brevet:
**14.08.91**

(51) Int. Cl.⁵: **B62D 25/20**

(21) Numéro de dépôt: **87440031.0**

(22) Date de dépôt: **29.05.87**

(54) **Plateau de semi-remorque.**

(30) Priorité: **20.02.87 FR 8702725**

(43) Date de publication de la demande:
**12.10.88 Bulletin 88/41**

(45) Mention de la délivrance du brevet:
**14.08.91 Bulletin 91/33**

(84) Etats contractants désignés:
**AT BE CH DE ES GB GR IT LI LU NL SE**

(56) Documents cités:
**DE-B- 1 052 830**
**US-A- 1 493 736**
**US-A- 3 481 643**
**US-A- 4 534 589**

(73) Titulaire: **BENALU S.A.**
**108 rue Pierre Brossolette**
**F-62110 Henin-Beaumont (Pas-de-Calais)(FR)**

(72) Inventeur: **Wante, Guy**
**108 rue Pierre Brossolette**
**F-62110 Henin-Beaumont (Pas-de-Calais)(FR)**

(74) Mandataire: **Lepage, Jean-Pierre**
**Cabinet Lepage & Aubertin Innovations et**
**Prestations S.A. 23/25, rue Nicolas Leblanc**
**B.P. 1069**
**F-59011 Lille Cédex 1 (Nord)(FR)**

## Description

L'invention est relative à un plateau de semi-remorque. Elle trouvera son application notamment dans le domaine de la construction de véhicules industriels destinés au transport de marchandises.

Le plateau est destiné à former le chassis de la semi-remorque sur lequel se fixent les essieux et la carrosserie. Le plancher est directement fixé sur le plateau pour constituer la plate-forme de support de la marchandise.

Dans les constructions traditionnelles par exemple comme connu de US-A-4 534589, le plateau est généralement constitué d'un assemblage de longerons et traverses metalliques entrecroisés. On utilise l'acier comme matériau en raison de ses bonnes propriétés mécaniques et de son faible coût. L'avantage de l'acier, outre son coût, est qu'il est communément soudable et que ces soudures sont susceptibles de résister à des contraintes mécaniques sévères. Par contre, les constructions en acier souffrent également d'inconvénients.

Tout d'abord, ces matériaux résistent très mal à la corrosion, et pour les protéger, on doit appliquer un traitement de surface coûteux et dont l'efficacité est de durée limitée. Il faut d'ailleurs souligner que les dangers de corrosion sont d'autant plus grands qu'il s'agit d'un facteur essentiel pour assurer la longévité du matériel. Il faut d'ailleurs souligner que la corrosion est d'autant plus vive que l'on a recours de plus en plus fréquemment au salage des routes.

L'autre inconvénient de l'acier est son poids. Il est en effet très clair qu'en matière de transport, il est plus avantageux d'utiliser une structure de support qui soit la plus légère possible pour réduire la consommation d'énergie. L'acier présente des performances très médiocres dans ce domaine, ce qui l'amène à se faire concurrencer en particulier par l'aluminium qui offre de nombreux avantages.

L'aluminium résiste très bien à la corrosion même en l'absence de traitements spécifiques et les nouveaux alliages lui permettent de bénéficier de propriétés mécaniques sensiblement améliorées. De plus, le développement des techniques de soudage fait qu'il s'agit d'un matériau susceptible d'être employé dans des constructions mécano-soudées telles qu'on les rencontre dans les plateaux pour semi-remorques.

Précisément dans cette application, un type de plateau assez répandu est constitué d'un emboîtement de traverses à travers des longerons bordés latéralement par des rives profilées qui comportent un rebord inférieur de rigidité. Les profilés utilisés sont obtenus par extrusion et la fixation des différents composants se fait généralement par soudure.

Actuellement, la géométrie du profil des traverses est de forme circulaire. Ce choix a été fait en particulier en raison des facilités d'usinage que présente une section circulaire. A l'usage, il s'avère cependant que ce type de traverse présente de nombreux inconvénients.

Tout particulièrement, au niveau de la liaison des extrémités de traverses sur les rives latérales où la fixation est délicate à réaliser et les efforts transmis par la carrosserie importants. En effet, le rebord inférieur des rives gêne l'accès pour réaliser un codron continu de soudure. Dans ces conditions, seule la partie supérieure de l'extrémité de traverse est fixée à la rive. La section circulaire de la traverse en contact avec le rebord inférieur limite la surface de la zone tangente à un point d'où une grande fragilité à ce niveau d'autant plus regrettable qu'il s'agit précisément d'une zone d'effort.

De nombreux incidents sont constatés à ce niveau en raison de l'absence de liaison dans la partie inférieure de la traverse sur la rive.

On peut également reprocher à la section circulaire de présenter un moment d'inertie qui est loin d'être optimum eu égard à la masse de matière employée et à l'orientation des efforts existants.

Par ailleurs, on connaît du document américain US-A-4.534.589 un autre mode de réalisation de plateau de semi-remorque destiné à former un support de carrosserie.

Ce plateau est composé d'un assemblage de traverses, de profil en U, et de longerons, de profil en T inversé, l'âme du T présentant des découpes en forme de créneaux pour y entrecroiser les dites traverses. En outre, ces dernières sont bordées d'une rive en forme de L dont une des ailes couvre le chant du plateau et l'autre aile repose sur la face supérieure des traverses.

Une telle réalisation souffre des inconvénients inhérents au profil ouvert et manque de résistance au niveau des chants latéraux du plateau.

Le but principal de la présente invention est de présenter un plateau de semi-remorque dont la structure est renforcée par rapport aux constructions actuelles, ceci étant obtenu sans majoration du poids. En particulier, la fixation des traverses sur les rives latérales assure une répartition de la contrainte sur l'ensemble de la circonférence de la traverse d'où une excellente aptitude à encaisser les efforts.

La construction du plateau est elle-même facilitée étant donné que le positionnement des traverses en rotation est automatiquement assuré avec une grande précision, que les profilés de support de plancher seront de ce fait parfaitement orientés, qu on pourra limiter la soudure traverse-longeron au plus juste. Il faut noter en outre que, contrairement à un extrudé circulaire qui présente souvent des défauts d'alignement d'une même génératrice (vrillage), déformation par torsion plus ou moins régulière de l'extrudé au moment de l'extrusion, le nouveau profil de traverse selon l'invention sera obtenu directement d'extrusion avec une tolérance de torsion extrêmement faible car sa forme permet de limiter ce vrillage à une valeur très inférieure à l'autre cas et tout à fait suffisante pour notre utilisation.

Non seulement la fixation des traverses sur les rives est plus aisée, mais la soudure des traverses sur les longerons est également facilitée étant donné qu'il est créé, selon la présente invention, des zones de dégagement qui facilitent l'accès pour la réalisation des cordons de soudure.

Selon l'invention, le plateau de semi-remorque, destiné à former un support de carrosserie, composé d'un assemblage de traverses et longerons, bordés latéralement par des rives profilées qui comprennent un rebord inférieur, caractérisé par le fait que les dites traverses présentent une zone d'appui à plat sur le rebord des rives latérales ainsi qu'un profil sensiblement polygonal, tel qu'au niveau de l'intersection avec les longerons, il présente deux zones d'appui concourantes.

L'invention sera mieux comprise à la lecture de la description suivante accompagnée de dessins en annexe parmi lesquels :

- la figure 1 schématise une vue en coupe transversale de la structure d'un plateau de semi-remorque,
- la figure 2 représente l'assemblage d'une traverse de conception traditionnelle sur une rive latérale,
- la figure 3 illustre un profil de traverse selon la présente invention,
- la figure 4 représente un second mode de réalisation du profil de traverse selon la présente invention,
- la figure 5 schématise la fixation de la traverse sur la rive latérale du plateau,
- la figure 6 représente une vue en coupe transversale de la structure du plateau selon la présente invention,
- la figure 7 représente une vue de coupe transversale d'une traverse selon la présente invention équipée d'un clip de support de plancher.

La présente invention vise un plateau de semi-remorque qui trouvera son application dans le domaine de la construction de véhicules industriels. Quoique l'invention ait été plus particulièrement développée en ce qui concerne le domaine routier, elle pourra s'étendre également au domaine ferroviaire.

Les principales difficultés rencontrées avec l'emploi de l'aluminium se situent au niveau de la soudure des traverses sur les rives latérales . En effet, pour des raisons de commodité d'usinage, le profil des traverses présente une forme circulaire qui se prête mal à la mise en place d'une soudure continue au niveau des rives latérales. En particulier, la partie inférieure de la traverse présente une faiblesse en n'étant pas fixée sur la rive alors qu'il s'agit d'une zone d'effort. Il s'en suit des ruptures accidentelles qui causent de graves préjudices aux semi-remorques.

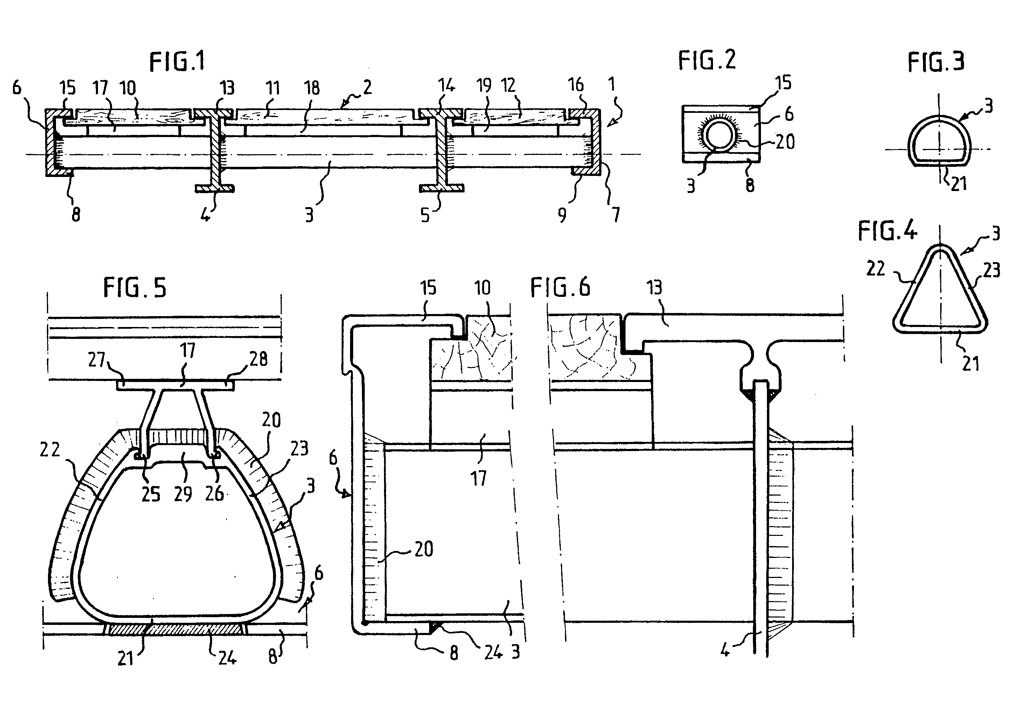

La figure 1 schématise en vue de coupe transversale la section d'un plateau 1 de semi-remorque selon une conception traditionnelle de celui-ci. Le plateau 1 forme à sa surface supérieure un plancher 2 destiné à recevoir les marchandises à transporter. Le plateau 1 est également conçu pour être carrossé, c'est-à-dire recevoir des parois latérales pour former la caisse de la semi-remorque.

La structure du plateau 1 se compose d'un assemblage de traverses 3 et longerons 4 et 5. Les longerons 4 et 5 présentant une série de découpes appropriées pour autoriser le passage des traverses 3 dans leur partie centrale. La section des longerons 4 et 5 est en forme de "I" afin de présenter un moment d'inertie élevée.

Le plateau 1 est bordé latéralement par des rives profilées 6 et 7 qui présentent respectivement un rebord inférieur 8 et 9 afin d'améliorer leur rigidité.

Le plancher 2 du plateau est confectionné par la mise en place d'éléments couvrants 10, 11 et 12 généralement en bois dont le maintien est assuré par les ailes supérieures 13 et 14 des longerons 4 et 5 et les rebords supérieurs 15 et 16 des rives latérales 6 et 7.

Le soutien des éléments couvrants 10, 11 et 12 est assuré par les traverses 3 rehaussées à l'aide de clips 17, 18 et 19 fixés sur les traverses 3 et qui présentent traditionnellement une forme de U.

La figure 2 illustre la fixation de la traverse 3 sur la rive latérale 6. Il s'agit d'une traverse de type traditionnel à section circulaire.

La liaison est assurée au moyen d'un cordon de soudure 20 disposé à la périphérie de l'extrémité de traverse 3. Cependant, pour des raisons d'accessibilité, actuellement le cordon de soudure 20 ne décrit pas la totalité de la circonférence de la traverse 3 en raison de la présence du rebord inférieur 8 de la traverse 6 qui gêne l'accès.

La liaison présente par conséquent une grave faiblesse dans la partie inférieure de la traverse 3. Il faut également souligner que la surface de contact du rebord 8 de la rive 6 avec la section circulaire de la traverse 3 se limite à un point de tangence trop limité pour assurer une liaison efficace entre la traverse 3 et le rebord 8.

Selon la caractéristique principale de la présente invention, le plateau de semi-remorque est confectionné à partir de traverses 3 qui présentent un profil particulier plus spécialement une zone d'appui à plat sur le rebord des rives. Un exemple de ce type de profil est donné à la figure 3 où la traverse 3 présente à sa base un méplat 21 qui constitue une zone de contact important avec le rebord inférieur 8 ou 9 des rives latérales 6 ou 7 où il est possible par conséquent de mettre en place une liaison efficace par exemple par cordon de soudure.

L'adoption d'un tel profil présente également des avantages au niveau de la construction puisque le positionnement des différents éléments peut être réalisé au niveau de l'assemblage. En effet, le méplat 21 empêche la rotation de la traverse 3 dans les alésages correspondant des longerons 4 et 5 et l'appui des rebords inférieurs 8 et 9 des rives latérales 6 et 7 sur le méplat 21 des traverses 3 assure le positionnement des dites rives latérales.

En conservant les avantages du méplat 21 décrit précédemment, le profil préférentiel pour la réalisation des traverses présentera une forme sensiblement polygonale à angle arrondi. Ce choix a en outre l'avantage d'augmenter, à section égale, le moment d'inertie de la traverse 3 qui est ainsi plus rigide et peut donc recevoir des charges plus importantes.

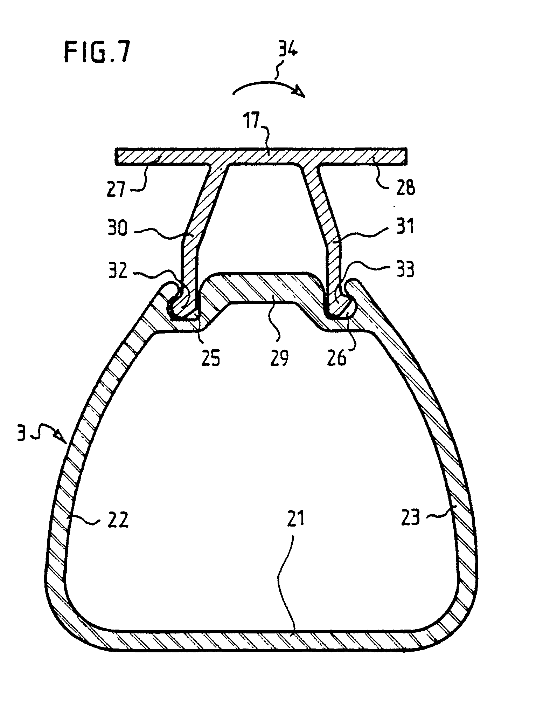

Une amélioration du profil de la figure 3 peut être apporté aux traverses 3 en les dotant notamment de deux zones planes ou curvilignes d'appui 22, 23 concourantes telles qu'illustrées à la figure 4 ou 5 c'est-à-dire avec une forme sensiblement triangulaire.

Ces zones planes d'appui concourantes 22 et 23 permettent tout d'abord un centrage du positionnement de la traverse 3 dans les alésages des longerons 4 et 5 même lorsque la construction du plateau s'effectue à l'envers. De plus, les deux zones planes d'appui concourantes 22 et 23 se dégagent des ailes supérieures 13 et 14 des longerons 4 et 5 et donc la mise en place du cordon de soudure de liaison est plus facile à effectuer.

Les figures 5 et 6 représentent respectivement en vue de coupe et en vue longitudinale, la mise en place d'une traverse selon un mode préférentiel de réalisation de celle-ci dans le cadre de la présente invention.

Le profil de la traverse 3 est avantageusement quasi-triangulaire et de plus sensiblement équilatéral, la base présentant le méplat 21 et les deux autres côtés concourants 22, 23 étant légèrement curvilignes.

Tout d'abord, on peut noter que le cordon de soudure 20 de liaison de l'extrémité de la traverse 3 sur le fond de la rive latérale 6 est renforcé par la mise en place d'un cordon 24 de soudure établi entre l'extrémité du rebord inférieur 8 de la traverse 6 et le méplat 21 inférieur de la traverse 3. Cette conception est d'autant plus résistante que la liaison est établie à l'extrémité du rebord inférieur 8 de la rive latérale 6 et par conséquent il est créé un bras de levier correspondant à la longueur du rebord inférieur 8 qui diminue la contrainte dans la soudure 24.

On pourra également apprécier la parfaite accessibilité pour la mise en place des cordons de soudure 20 et 24.

Le clip 17 de fixation des éléments de plancher 10 est fixé sur la traverse 3 par l'intermédiaire de rainures 25 et 26 dont l'écartement est étroit et situé entre les deux zones d'appui concourantes 22 et 23. Le clip 17 présente deux ailes latérales saillantes 27 et 28 qui améliorent la stabilité du support de plancher.

Un premier mode de réalisation des clips 17 est illustré à la figure 5. Sous les ailes saillantes 27, 28 sont disposées des pattes de fixation 30, 31 symétriques dont les extrémités forment encliquetage avec les rainures 25, 26 de la traverse 3, le clip présentant une section de forme générale en $\pi$.

Un second mode de réalisation des clips est illustré à la figure 7. On retrouve la section de forme en $\pi$, les ailes 27, 28, les pattes de fixation 30, 31. Toutefois, les pattes sont dissymétriques, l'extrémité 32 de la patte 30 formant avec la rainure 25 un dispositif charnière et l'encliquetage du clip 17 sur la traverse étant réalisé après rotation du clip, selon la flèche 34, grâce à l'extrémité 33 qui forme alors accrochage dans la rainure.

Ces modes de réalisation sont avantageux par rapport à ceux qui prévoient des extrémités des pattes 30, 31 simplement emboîtées dans les rainures 25, 26 car, du fait des vibrations provoquées lors du roulage du semi-remorque, les clips "sauteraient" et se déchausseraient malgré le poids du plancher. Un point de soudure entre les clips et les traverses s'imposerait alors. Les réalisations de la présente invention permettent d'éviter ces inconvénients et ce surcroît de main d'oeuvre.

Par ailleurs, le sommet de la traverse 3 présente une surépaisseur 29 localisée entre les rainures 25 et 26 afin d'accroître la rigidité.

## Revendications

1. Plateau de semi-remorque, destiné à former un support de carrosserie, composé d'un assemblage de traverses (3) et longerons (4, 5), bordés latéralement par des rives profilées (6, 7) qui comprennent un rebord (8, 9), caractérisé par le fait que ledit rebord est situé à l'inférieur des rives profilées et que les dites traverses (3) présentent une zone (21) d'appui à plat sur le rebord (8, 9) des rives latérales (6, 7) ainsi qu'un profil sensiblement polygonal, tel qu'au niveau de l'intersection avec les longerons (4, 5), il présente deux zones (22, 23) d'appui concourantes.

2. Plateau de semi-remorque selon la revendication 1, caractérisé par le fait que les dites traverses (3) présentent une zone de fixation sur les extrémités des rebords (8, 9) des rives latérales (6, 7).

3. Plateau de semi-remorque selon la revendication 1, caractérisé par le fait que les dites traverses (3) présentent à leur base un méplat (21) et à leur partie supérieure un profil circulaire.

4. Plateau de semi-remorque selon la revendication 1, caractérisé par le fait que les dites traverses (3) présentent à leur base un méplat (21) et à leur partie supérieure deux zones (22, 23) planes d'appui concourantes.

5. Plateau de semi-remorque selon la revendication 1, caractérisé par le fait que les dites traverses (3) présentent à leur base un méplat (21) et à leur partie supérieure deux zones (22, 23) curvilignes d'appui concourantes.

6. Plateau de semi-remorque selon la revendication 1, caractérisé par le fait que le sommet de la traverse (3) présente une surépaisseur (29) de renfort.

7. Plateau de semi-remorque selon la revendication 6, dont les traverses (3) sont surmontées par au moins un clip (17) de soutien de plancher (2) et dont les dites traverses (3) comportent à leur partie supérieure des rainures (25, 26) de fixation du clip (17) sur la traverse (3) présentant un écartement étroit situé entre les deux zones d'appui concourantes (22, 23).

8. Plateau de semi-remorque selon la revendication 7, caractérisé par le fait que le clip (17) présente deux ailes latérales saillantes (27, 28).

9. Plateau de semi-remorque selon la revendication 7, caractérisé par le fait que le dit clip (17) présente deux pattes de fixation (30, 31) dissymétriques, l'extrémité de l'une (32) étant destinée à former une charnière, l'autre (33) étant destinée à former un encliquetage avec la rainure correspondante (26).

10. Plateau de semi-remorque selon la revendication 4 ou 5, caractérisé par le fait que les dites traverses (3) présentent un profil de forme sensiblement triangulaire, sensiblement équilatéral, à angle arrondi.

## Claims

1. Semi-trailer deck, designed to form a bodywork support, composed of an assembly of cross members (3) and side members (4,5), laterally bordered by sectional edgings (6,7) which include a flange (8,9), characterized by the fact that the said flange is located on the inside of the sectional edgings and that the said cross members (3) have an area (21) for bearing flat against the flanges (8,9) of the lateral edgings, as well as a substantially polygonal profile such that, at the intersection with the side members (4,5), it has two converging bearing areas (22,23).

2. Semi-trailer deck according to claim 1, characterized by the fact that the said cross members (3) have an area for fixing onto the ends of the flanges (8,9) of the lateral edgings (6,7).

3. Semi-trailer deck according to claim 1, characterized by the fact that the said cross members (3) have, on their base, a flat face (21) and, on their upper portion, a circular profile.

4. Semi-trailer deck according to claim 1, characterized by the fact that the said cross members (3) have, on their base, a flat face (21) and, on their upper portion, two plane, converging bearing areas (22,23).

5. Semi-trailer deck according to claim 1, characterized by the fact that the said cross members (3) have, on their base, a flat face (21) and, on their upper portion, two curvilinear, converging bearing areas (22,23).

6. Semi-trailer deck according to claim 1, characterized by the fact that the apex of the cross member (3) has an additional reinforcing thickness (29).

7. Semi-trailer deck according to claim 6, whereof the cross members (3) are surmounted by at least one fastener (17) for supporting a flooring (2) and whereof the said cross members (3) comprise on their upper portion grooves (25,26) for fixing the fastener (17) onto the cross member (3) narrowly spaced between the two converging supporting areas (22,23).

8. Semi-trailer deck according to claim 7, characterized by the fact that the fastener (17) has two projecting lateral wings (27,28).

9. Semi-trailer deck according to claim 7, characterized by the fact that the said fastener (17) has two dissymmetrical fixing feet (30,31), the end of one (32) being designed to form a hinge, the other (33) being designed to form a snap fastening with the matching groove (26)

10. Semi-trailer deck according to claim 4 or 5, characterized by the fact that the said cross members (3) have a profile of a substantially triangular, substantially equilateral shape, with rounded corners.

**Patentansprüche**

1. Bodenplatte für Sattelanhänger, zur Bildung eines Karrosserieträgers, bestehend aus einer Zusammensetzung von Querträgern (3) und Längsträgern (4), die seitlich durch Randprofile (6, 7), die eine Randleiste (8, 9) umfassen, eingefaßt sind, dadurch gekennzeichnet, daß sich die genannte Randleiste am Unterteil der Randprofile befindet und die genannten Querträger (3) einen flachen Bereich (21) zum Anlehnen an die Randleiste (8, 9) der Seitenränder (6, 7) sowie ein im wesentlichen vieleckiges Profil aufweisen, sodaß sie im Bereich des Kreuzpunktes mit den Längsträgern (4, 5) zwei zusammenlaufende Tragbereiche (22, 23) aufweist.

2. Bodenplatte für Sattelanhänger nach Anspruch 1, dadurch gekennzeichnet, daß die genannten Querträger (3) einen Bereich zur Befestigung an die Enden der Randleisten (8, 9) der Seitenränder (6, 7) aufweisen.

3. Bodenplatte für Sattelanhänger nach Anspruch 1, dadurch gekennzeichnet, daß die genannten Querträger (3) an deren Basis eine Abflachung (21) und an deren Oberteil ein kreisförmiges Profil aufweisen.

4. Bodenplatte für Sattelanhänger nach Anspruch 1, dadurch gekennzeichnet, daß die genannten Querträger (3) an deren Basis eine Abflachung (21) und an deren Oberteil zwei flache, zusammenlaufende Tragbereiche (22, 23) aufweisen.

5. Bodenplatte für Sattelanhänger nach Anspruch 1, dadurch gekennzeichnet, daß die genannten Querträger (3) an deren Basis eine Abflachung (21) und an deren Oberteil zwei krummlinige, zusammenlaufende Tragbereiche (22, 23) aufweisen.

6. Bodenplatte für Sattelanhänger nach Anspruch 1, dadurch gekennzeichnet, daß die Spitze des Querträgers (3) eine Verstärkungsüberhöhung (29) aufweist.

7. Bodenplatte für Sattelanhänger nach Anspruch 6, deren Querträger (3) mit wenigstens einer Klammer (17) zur Unterstützung des Bodens (2) gekrönt sind und deren genannte Querträger (3) an deren Oberteil Nuten (25, 26) zur Befestigung der Klammer (17) an den Querträger (3) umfassen, die einen zwischen den beiden zusammenlaufenden Tragbereichen (22, 23) befindlichen schmalen Abstand aufweisen.

8. Bodenplatte für Sattelanhänger nach Anspruch 7, dadurch gekennzeichnet, daß die Klammer (17) zwei ausragende Seitenflügel (27, 28) aufweist.

9. Bodenplatte für Sattelanhänger nach Anspruch 7, dadurch gekennzeichnet, daß die genannte Klammer (17) zwei unsymmetrische Befestigungsfüßchen (30, 31) aufweist, wobei das Ende des einen (32) zur Bildung eines Scharniers und das andere (33) zur Bildung einer Einklinkung in der entsprechenden Nute (26) dienen.

10. Bodenplatte für Sattelanhänger nach Anspruch 4 oder 5, dadurch gekennzeichnet, daß die genannten Querträger (3) ein im wesentlichen dreieckförmiges, im wesentlichen gleichseitiges Profil mit abgerundetem Winkel aufweisen.

FIG.1

6  15  17  10      13  11  18    2      14  19  12      16  1

8      4      3      5      9  7

FIG.2

15
6
20

3    8

FIG.3

3

21

FIG.4

3
22        23

21

FIG.5

27    17    28

22                    20
                      23
                      3
25  29  26            6

21    24    8

15    10

6

17

20

8  24  3

FIG.6

13

4

EP 0 285 732 B1

FIG.7